# FASCICULE DE BREVET EUROPEEN

(11) **EP 0 948 887 B1**
(45) Date de publication et mention de la délivrance du brevet: **12.09.2001**
(21) Numéro de dépôt: 99390006.7
(22) Date de dépôt: 01.04.1999
(51) Int. Cl.: A01G 9/24

(54) **Dispositif autonome de distribution de produits de traitement en enceinte fermée et système de positionnement dudit dispositif**
Unhabhängige Vorrichtung zur Austeilung eines Behandlungsmittels in einem geschlossenen Raum und Positionierungssystem für solche Vorrichtung
Independent device for distributing treating products in a closed chamber and positionning system for such device

(30) Priorité: 06.04.1998 FR 9804239
(43) Date de publication de la demande: 13.10.1999
(73) Titulaire: Entreprise Individuelle Lapeyre François, 11270 La Force (FR)
(72) Inventeur: Lapeyre, François, 11270 La Force (FR)
(74) Mandataire: Ravina, Bernard

(56) Documents cités:
- DE-A- 2 206 275
- DE-A- 3 814 203
- DE-A- 3 910 287
- DE-U- 8 700 020
- US-A- 4 074 856
- US-A- 4 723 714

## Description

La présente invention concerne un dispositif autonome de distribution de produits de traitement en enceinte fermée et son système de positionnement.

Le traitement de végétaux en enceinte fermée pose de nombreux problèmes économiques et de sécurité des personnes. Il est connu de traiter des végétaux dans des serres par l'intermédiaire de buses fixes reliées à des réservoirs de produits. Ces systèmes sont très coûteux car ils nécessitent l'emploi de très nombreuses buses pour pouvoir traiter l'ensemble des végétaux. De plus, il y a évidemment autant de systèmes que de serres à traiter alors que le temps d'utilisation de chaque système ne dépasse pas quelques minutes par jour. L'investissement dans de tels systèmes n'est donc pas à la portée de nombreux exploitants et plus particulièrement dans le cadre de cultures maraîchères à faible valeur ajoutée.

Il est également connu des systèmes de traitement manuel, moins coûteux que le précédent, mais exposant le personnel à des produits parfois très toxiques. Ces systèmes sont généralement constitués d'une lance de pulvérisation reliée à un réservoir extérieur ou à une réserve portée par l'utilisateur. Les conditions d'utilisation de tels dispositifs sont très difficiles pour le personnel, les produits étant très toxiques, le personnel doit porter des combinaisons de protection alors que les températures à l'intérieur des serres sont généralement déjà très élevées, rendant le travail particulièrement pénible. Malgré toutes ces protections, le personnel reste inévitablement en contact avec des produits très toxiques. Il est également à noter qu'une projection manuelle des produits ne peut pas être aussi régulière que si elle est automatisée, certaines zones de cultures risquent de manquer de traitement et inversement, d'autres zones seront sur-traitées ce qui n 'est pas souhaitable non plus. Enfin, le rendement de traitement manuel n'est pas très efficace, il est donc nécessaire de multiplier le personnel dans le cadre de grandes exploitations.

Un système de positionnement d'un dispositif autonome de distribution de produits de traitement ayant les caractéristiques du préambule de la revendication 1 est connu par exemple par le document DE-U-8700020.

Il est également connu des systèmes adaptés à l'arrosage constitué d'un chariot mobile guidé sur un ou plusieurs rails pour permettre un déplacement au-dessus des cultures à arroser, de tels systèmes sont décrits dans les brevets US 4 723 714, US 4 074 856, DE 39 10 287, DE 38 14 203, DE 22 06 275. Dans chacun des systèmes de ces brevets, les chariots mobiles sont dédiés à une seule serre car ils sont indémontables facilement de leur rail de guidage. On comprend bien qu'il est nécessaire de multiplier le nombre de chariots (ainsi que toute l'installation annexe au chariot, tuyaux d'alimentation...) par le nombre de serres. Ce type d'installation ne peut donc pas être rentable pour des installations de traitement ne fonctionnant que quelques minutes par jour.

La présente invention vise à proposer une solution à tous ces problèmes en mettant en oeuvre un dispositif autonome de traitement ou d'arrosage de végétaux en enceinte fermée comportant:
- un mobile autonome pouvant être mis en place sur un rail de guidage horizontal et se déplaçant sur ledit rail horizontal interne à l'enceinte, ledit mobile pouvant être commandé de l'extérieur après fermeture de l'enceinte et pouvant être retiré du rail de guidage après traitement pour être installé dans une autre enceinte.
- un outil de traitement relié au mobile autonome et assurant la distribution de produit .

La présente invention vise un système de positionnement tridimensionnel dudit dispositif, associé par exemple à un attelage pouvant supporter également un stockage des produits de traitement.

Grâce à la présente invention, il n'est donc pas nécessaire de multiplier le nombre de dispositifs de traitement par le nombre de serres, seul le rail horizontal reste en place. De plus ce dispositif permet de traiter entièrement et de manière régulière une serre en quelques minutes, sans exposer le personnel qui peut rester à extérieur de l'enceinte. Enfin, la rampe extensible permet d'insérer le dispositif dans une serre classique, par la porte d'accès, puis, par extension de couvrir entièrement la largeur de la serre. Ce dispositif replié est donc très compact et peut aisément tenir sur un attelage mobile par exemple pour être déplacé d'une serre à une autre.

D'autres avantages et caractéristiques de l'invention apparaîtront à la lecture de la description ci-après de formes de réalisation de l'invention données à titre d'exemple non limitatifs et illustrés par les dessins joints dans lesquels:
- la figure 1 représente la rampe déployée à l'intérieur de la serre.
- la figure 2 représente en perspective le mobile autonome, la rampe repliée ainsi qu'une partie du dispositif d'accouplement.
- la figure 3 représente le mobile autonome et l'ensemble moteur.
- la figure 4 représente un autre mode de réalisation du système d'entraînement du mobile autonome.
- la figure 5 représente une autre forme de réalisation de la rampe extensible.
- la figure 6 représente un autre mode de réalisation du système de déploiement de la rampe extensible.
- la figure 7 représente un système adaptable à la rampe permettant de faire varier la distance entre les moyens de distribution de produits.
- la figure 8 représente le portique de positionnement ainsi que l'ensemble mobile attelable.
- la figure 9 représente le dispositif d'accouplement du mobile autonome sur le rail de guidage.

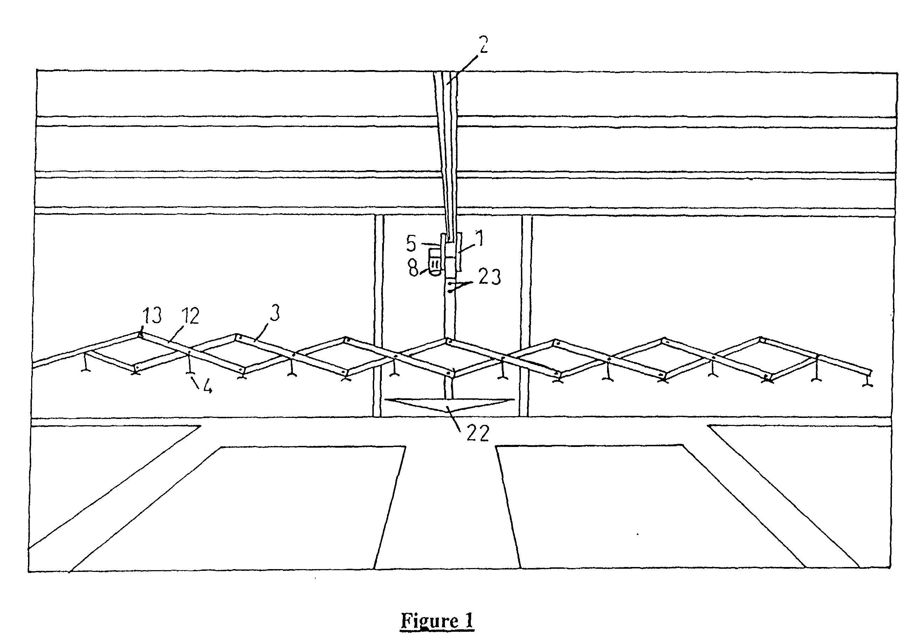

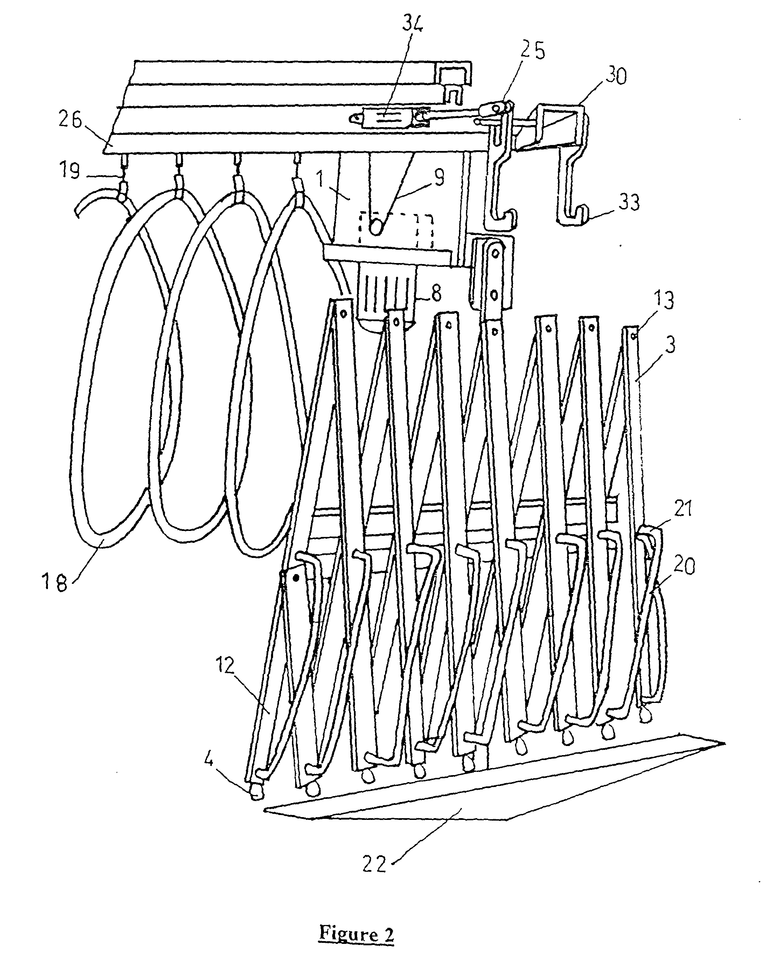

Le dispositif autonome de traitement (figures 1 et 2) est composé d'un mobile autonome (1) guidé sur un rail horizontal (2) et d'un outil de traitement (3) relié au mobile autonome et assurant la distribution de produits. L'outil de traitement peut être une rampe extensible latéralement (3) dotée de moyens de distribution de produits (4) ou bien un module d'aspersion à haute pression par exemple.

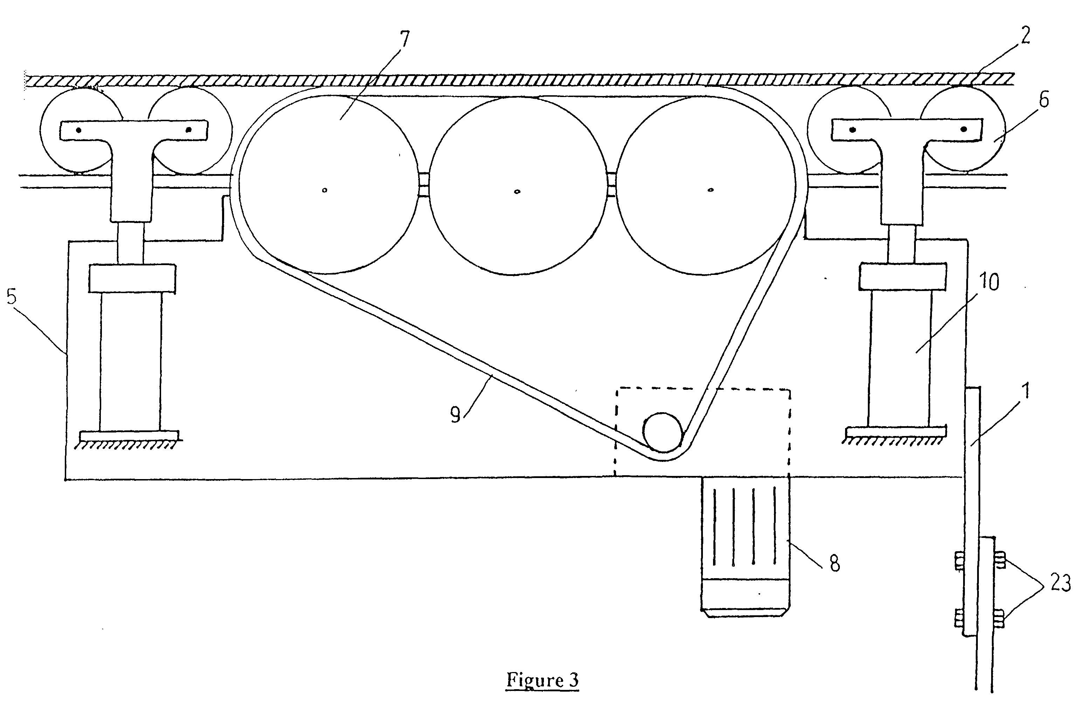

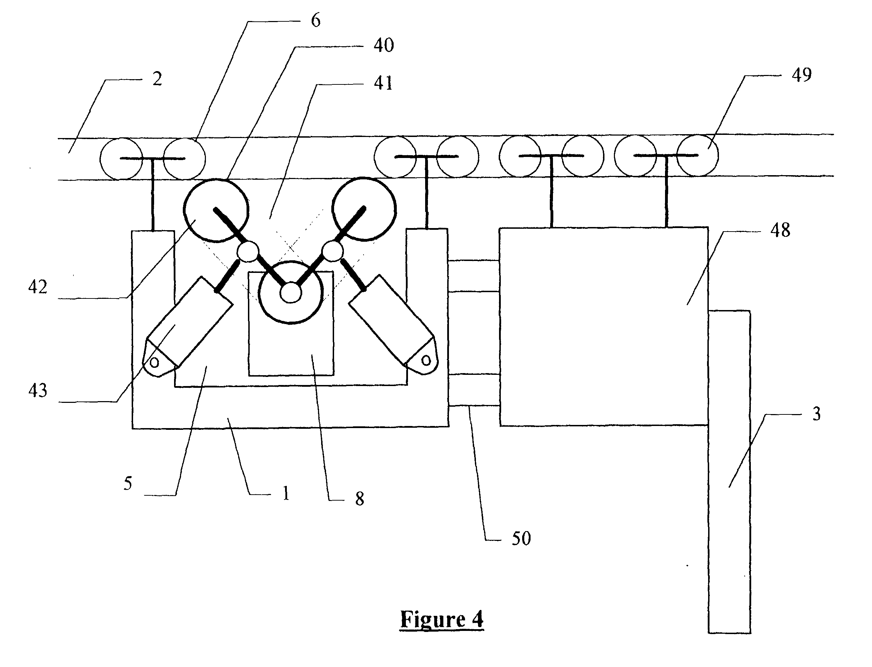

Le mobile autonome (1) est entraîné par un ensemble moteur (5) guidé par quatre galets (6) à l'intérieur du rail (2) (figure 3 et 4).

Selon un premier mode de réalisation représenté sur la figure 3, Le déplacement du mobile est assuré par des galets (7) portant une courroie prenant appui sur la partie interne supérieure du rail (1), de telle sorte à former une chenille. La courroie (9) est entraînée en rotation par un motoréducteur (8). La pression d'adhérence exercée par la courroie (9) sur le rail est assurée par deux vérins (10). Le réglage de la pression d'air dans ces vérins permet de faire varier la pression entre les galets (7) et le rail (2) pour obtenir l'adhérence optimale. De plus, ces vérins jouent un rôle d'amortisseur permettant de compenser certains défauts dans le guidage tout en assurant l'adhérence nécessaire pour l'entraînement.

Selon un autre mode de réalisation représenté sur la figure 4, le mobile autonome est entraîné par des roues d'adhérence (40) prenant appui sur la surface externe de la partie inférieur du rail (2). Les roues (40) sont entraînées par des courroies (41) reliées à un motoréducteur (8). Les roues (40) sont maintenues par des biellettes articulées (42). Sur chaque biellette, un vérin (43) permet d'exercer une pression d'adhérence.

La commande du mobile autonome est assurée depuis l'extérieur de l'enceinte par un pupitre de commande (11). Le rail de guidage (2) du mobile est situé à environ deux mètres de hauteur, au milieu de la serre dans l'axe longitudinal. Il peut être fixé directement aux montants de la serre ou maintenu par une structure indépendante. Ce rail est un profilé rectangulaire de dimensions 50mm par 40mm par exemple, fendu sur sa partie inférieure.

Le mobile autonome (1) peut supporter une rampe extensible (figure 2) composée d'une série de croisillons (12) formant des parallélogrammes déformables. Chaque croisillon comporte trois axes de rotation (13), un au milieu et un à chaque extrémité. Chacun de ces points de rotation est lié aux points de rotation correspondants des croisillons voisins. L'assemblage de plusieurs croisillons selon ce principe forme une structure déformable latéralement.

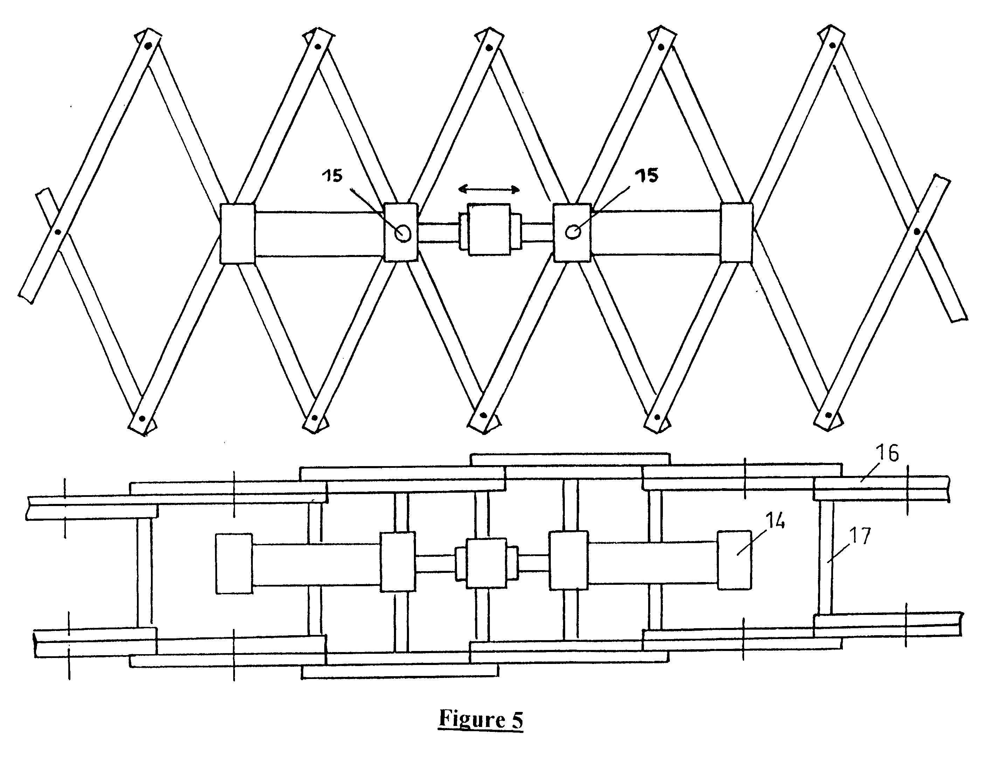

Selon un premier mode de réalisation représenté sur la figure 5, le déploiement de la rampe s'effectue grâce à deux vérins (14) liés aux axes (15) du milieu des croisillons formant le parallélogramme du centre de la rampe. Par déplacement de ces deux points d'articulation selon une direction horizontale dans des sens opposés divergeants, la rampe se déploie.Inversement, lorsque ces deux points convergent, la rampe se replie.

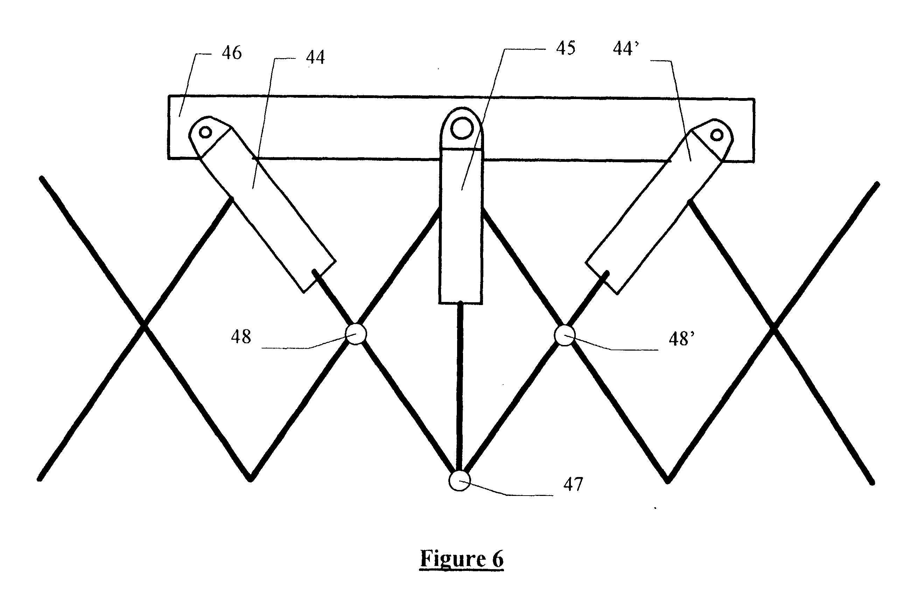

Selon un autre mode de réalisation représenté sur la figure 6, le déploiement de la rampe est assuré par trois vérins, un vérin central (45) et deux vérins latéraux (44) et (44'). La base de chaque vérin est articulé sur un support (46). La tige du vérin central est articulée sur le point de pivot inférieur (47) du centre de la rampe. Les tiges des vérins latéraux sont articulées sur les points de pivot intermédiaires (48) et (48') du milieu de la rampe. Cette disposition permet de limiter les efforts des vérins et donc d'employer des vérins de plus petit diamètre. Lorsque la rampe est repliée, le vérin central est tige sortie et les vérins latéraux tiges rentrées et inversement lorsque la rampe est déployée.

La rampe repliée permet de passer au travers d'un accès classique de serre d'environ 1,5m de large. Lorsque la rampe est déployée, sa largeur est plus que quadruplée.

Selon une autre forme de réalisation de l'invention (figure 5), la rampe est constituée deux séries parallèles de croisillons (16) écartées par des entretoises (17). En partant du centre de la rampe dans les deux sens, chaque croisillon est monté sur le coté intérieur du croisillon précédent. La largeur de la rampe diminue donc vers l'extérieur. Cette forme de réalisation permet d'obtenir une structure plus rigide. De plus, lorsque l'on utilise que deux vérins, les vérins de déploiement (14) sont situés entre les deux séries de croisillons, les efforts de déploiement sont ainsi symétriques et mieux répartis. Les croisillons peuvent êtres réalisés en profilé de section carré 20mm par 20mm en acier inoxydable par exemple.

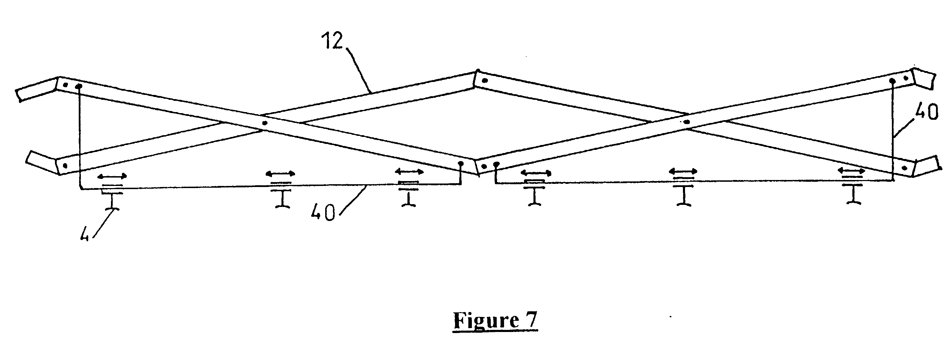

La rampe extensible est dotée de moyens de distribution de produits (4). Ces moyens de distribution peuvent par exemple être des buses de projection de liquides, des distributeurs à disques rotatifs pour la projection de poudres, ou bien encore des canons de traitement pour les cultures hautes par exemple. Les moyens de distribution de produits peuvent être montés directement sur les croisillons ou peuvent être montés sur des tringles (40) représentées sur la figure 7. Les moyens de distribution de produits sont alors montés coulissants sur les tringles ce qui permet de régler leur position latérale. Les tringles (40) peuvent être des tubes métalliques fixés aux croisillons. La rampe extensible est dotée d'un bac de récupération (22) permettant d'éviter de répandre le peu de produit qui s'écoule encore des buses lorsque la rampe est repliée.

La rampe extensible peut être remplacée par tout autre type d'outil comme des semoirs ou bien encore un module d'aspersion à haute pression. L'utilisation de la haute pression permet la formation d'un brouillard très fin et tourbillonnant permettant de déposer des fines gouttelettes sur toutes les parties des cultures même sous les feuilles. On entend dans ce cas par haute pression, une pression d'environ 100 bars par exemple. Le module d'aspersion à haute pression est constitué de buses de projection pouvant effectuer un mouvement de balayage du haut vers le bas et de gauche à droite. La hauteur des buses peut être variable et celles-ci peuvent par exemple être situées entre 1 et 2m du sol. Selon un mode de réalisation de l'invention, les buses sont montées sur des biellettes articulées et le mouvement de balayage est assuré par des vérins. Dans le cas de l'utilisation en permanence de module d'aspersion haute pression avec le mobile autonome, il est envisageable de remplacer le motoréducteur (8) par une turbine à haute pression pour entraîner le mobile autonome (1).

Dans le cadre de projection de fluides, l'acheminement des produits depuis un réservoir de stockage vers le moyen de distribution (4) se fait par l'intermédiaire d'une conduite souple (18) (figure 2) formant des boucles suspendues au rail par des suspentes (19) qui coulissent dans ce rail. La distribution des produits depuis la conduite souple (18) vers les buses (4) se fait par des tuyaux (20), plus petits et dotés de raccords articulés (21) leur permettant de suivre les mouvements des croisillons (12). Dans le cadre d'utilisation de produits en petites quantités, le réservoir peut être directement fixé sur le mobile autonome.

Selon un premier mode de réalisation représenté sur les figures 1, 2 et 3, l'outil de traitement est désolidarisable du mobile autonome (1) simplement par l'intermédiaire de boulons (23).

Selon un autre mode de réalisation représenté sur la figure 4, chaque outil de traitement (3) est monté sur un chariot guidé par des galets (49). Le chariot et le mobile autonome peuvent être reliés entre eux par tout type d'accouplement (50) tel qu'un accouplement élastique par exemple. Il est donc envisageable de disposer d'un magasin d'outils de traitements montés sur des rails indépendants permettant d'assembler l'outil désiré sans avoir à le porter manuellement.

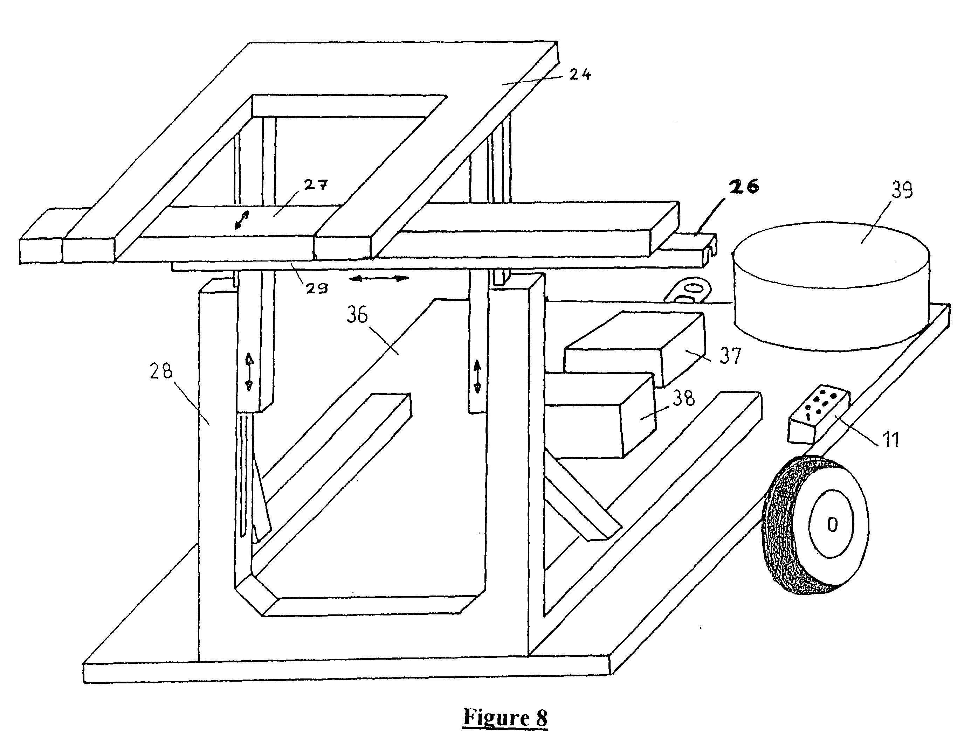

La présente invention vise un système de positionnement (figure 8). Ce système de positionnement est composé d'un portique de positionnement tridimensionnel (24) et d'un dispositif d'accouplement (25). Le portique de positionnement est constitué de trois guidages permettant un déplacement dans les trois dimensions. Le mobile autonome est alors soutenu par un rail de transport (26), sur le portique, identique au rail de guidage présent dans la serre. Le guidage latéral (27) et le guidage vertical (28) permettent d'aligner les rails (2) et (26). Le guidage longitudinal (29) permet de joindre les extrémités des rails. L'extrémité du rail de transport (26) est pourvue d'un cône de positionnement (30), permettant l'alignement parfait des deux rails.
Les actionneurs permettant ces déplacements peuvent être des vérins, hydrauliques ou pneumatiques, ou des motoréducteurs avec pignon et crémaillère. La commande de chaque actionneur se fait depuis un pupitre de commande (11). L'invention prévoit également un positionnement automatisé du mobile sur le rail par l'intermédiaire de capteurs permettant d'aligner automatiquement le rail de transport (26) situé sur le portique et le rail de guidage (2).

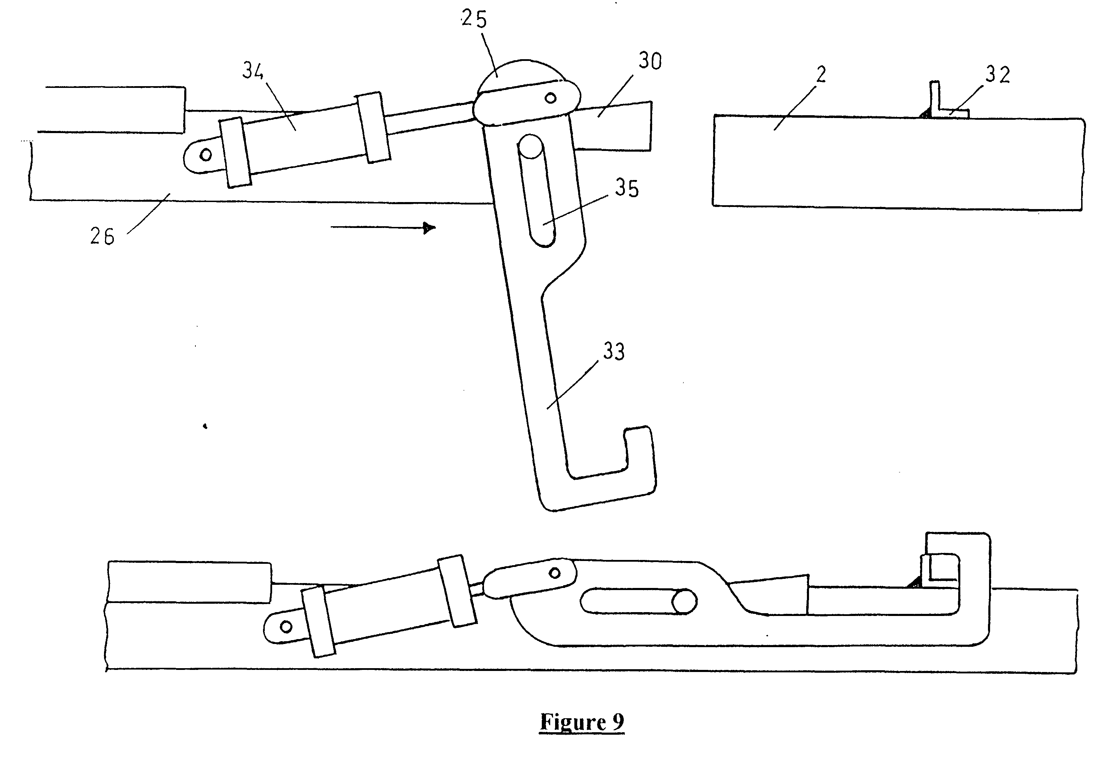

Le dispositif d'accouplement (25) (figure 9) permet de solidariser les extrémités des deux rails.
L'extrémité du rail de guidage (2) est pourvue d'une barre (32) soudée perpendiculairement au rail. Les crochets (33) situés de chaque coté du rail de transport sont animés d'un mouvement de rotation pour s'aligner avec le rail, puis d'un mouvement de translation permettant de saisir la barre (32) et d'assurer ainsi le maintien de l'ensemble. Ces mouvements sont assurés par des vérins (34) articulés à l'extrémité des crochets et des lumières (35) usinées dans les crochets.

L'ensemble des actionneurs peut être commandé manuellement depuis le pupitre de commande (11) ou être totalement automatisé, géré par un automate programmable ou tout autre type de programmation avec le cycle de fonctionnement suivant, donné à titre d'exemple:
- Positionnement automatique du rail de transport et du rail de guidage
- Accouplement
- Translation du mobile autonome jusqu'à l'intérieur de la serre.
- Déploiement de la rampe
- Mise en route des moyens de distribution de produits
- Translation du mobile autonome jusqu'au fond de la serre
- Arrêt des moyens de distribution
- Repliage de la rampe
- Retour rapide du mobile autonome
- Désaccouplement
- Retour du portique en position de transport

La présente invention vise également un ensemble mobile (36) (figure 8) supportant le système de positionnement, le pupitre de commande (11), des moyens de production d'énergie électrique (37) pouvant être un groupe électrogène ou un alternateur relié à la prise de force d'un tracteur, un ou plusieurs compresseurs (38) pneumatiques et/ou hydrauliques ainsi qu'un ou plusieurs réservoirs de produits (39).
L'ensemble mobile peut être attelé derrière un tracteur, mais il peut être également motorisé et guidé sur des rails au sol par exemple pour permettre un passage autonome d'une serre à une autre.

## Revendications

1. Système de positionnement d'un dispositif autonome de distribution de produits de traitement en enceinte fermée, ledit dispositif autonome comprenant :
- un mobile autonome (1) pouvant être mis en place sur un rail de guidage horizontal (2) et se déplaçant sur ledit rail horizontal interne à l'enceinte, ledit mobile pouvant être commandé de l'extérieur après fermeture de l'enceinte et pouvant être retiré du rail de guidage après traitement pour être installé dans une autre enceinte.
- un outil de traitement (3) relié au mobile autonome et assurant la distribution de produit
ledit système de positionnement étant **caractérisé en ce qu'**il comprend:
- un portique de positionnement tridimensionnel (24)
- un dispositif d'accouplement (25) du mobile autonome (1) sur le rail de guidage horizontal (2).

2. Ensemble mobile **caractérisé en ce qu'**il supporte le système de positionnement selon la revendication 1, un pupitre de commande (11), des moyens de production d'énergie électrique (37) pouvant être un groupe électrogène ou un alternateur relié à la prise de force d'un tracteur, un ou plusieurs compresseurs (38) pneumatiques et/ou hydrauliques ainsi qu'un ou plusieurs réservoirs de produits (39).

3. Système de positionnement selon la revendication 1 **caractérisé en ce que** l'outil de traitement est une rampe extensible latéralement (3) dotée de moyens de distribution de produits (4) relié à un réservoir de stockage (39) des dits produits.

4. Système de positionnement selon la revendication 1 **caractérisé en ce que** l'outil de traitement est un module d'aspersion à haute pression.

5. Système de positionnement selon la revendication 1 ou la revendication 3 ou la revendication 4 **caractérisé en ce que** le mobile autonome (1) est entraîné par un ensemble moteur (5) guidé par quatre galets (6) à l'intérieur du rail (2), le déplacement dudit mobile étant assuré par des galets (7) portant une courroie (9) prenant appui sur la partie interne supérieure du rail, ladite courroie (9) étant entraînée en rotation par un motoréducteur (8).

6. Système de positionnement selon la revendication 1 ou la revendication 3 ou la revendication 4 **caractérisé en ce que** le mobile autonome (1) est entraîné par un ensemble moteur (5) guidé par quatre galets (6) à l'intérieur du rail (2), le déplacement dudit mobile étant assuré par des roues d'adhérence (40) prenant appui sur la partie inférieure externe du rail, lesdites roues étant entraînée en rotation par des courroies (41) reliées à un motoréducteur (8).

7. Système de positionnement selon la revendication 4 **caractérisé en ce que** le mobile autonome est entraîné par une turbine à haute pression.

8. Système de positionnement selon la revendication 5 **caractérisé en ce que** la pression d'adhérence exercée par les galets (7) sur le rail est assurée par des vérins (10), le réglage de la pression d'air dans ces vérins permet de faire varier la pression entre les galets (7) et le rail (2) pour obtenir l'adhérence optimale, ces vérins jouent en outre un rôle d'amortisseur permettant de compenser certains défauts dans le guidage tout en assurant l'adhérence nécessaire pour l'entraînement.

9. Système de positionnement selon la revendication 6 **caractérisé en ce que** la pression d'adhérence exercée par les roues (40) sur le rail est assurée par des vérins (43), articulés sur les biellettes articulées (42) supportant les roues (40).

10. Système de positionnement selon la revendication 3 **caractérisé en ce que** la rampe extensible est composée d'une ou plusieurs séries de croisillons (12) formant des parallélogrammes déformables, chaque croisillon comportant trois axes de rotation (13), un au milieu et un à chaque extrémité, chacun de ces points de rotation étant lié aux points de rotation correspondants des croisillons voisins, l'assemblage de plusieurs croisillons selon ce principe formant une structure déformable latéralement.

11. Système de positionnement selon la revendication 10 **caractérisé en ce que** la rampe est constituée de deux séries parallèles de croisillons (16) écartées par des entretoises (17), cette forme de réalisation permettant d'obtenir une structure plus rigide.

12. Système de positionnement selon la revendication 10 ou la revendication 11 **caractérisé en ce que** le déploiement de la rampe s'effectue grâce à deux vérins (14) liés aux axes (15) du milieu des croisillons formant le parallélogramme du centre de la rampe, par déplacement de ces deux points d'articulation selon une direction horizontale dans des sens opposés divergeants, la rampe se déploie, et inversement, lorsque ces deux points convergent, la rampe se replie.

13. Système de positionnement selon la revendication 10 ou la revendication 11 **caractérisé en ce que** le déploiement de la rampe s'effectue grâce à trois vérins (44), (44') et (45) articulés sur un support (46) et articulés respectivement au point de pivot inférieur (47) du centre de la rampe et aux points de pivot intermédiaires (48) et (48') du milieu de la rampe.

14. Système de positionnement selon la revendication 3 **caractérisé en ce que** la rampe repliée permet de passer au travers d'un accès classique de serre d'environ 1,5m de large.

15. Système de positionnement selon la revendication 3 **caractérisé en ce que** les moyens de distribution de produits (4) peuvent être des buses de projection de liquides, des distributeurs à disques rotatifs pour la projection de poudre ou des canons de traitement pour les cultures hautes.

16. Système de positionnement selon la revendication 1 **caractérisé en ce que** l'acheminement des produits depuis un réservoir de stockage (39), non porté par le mobile autonome, vers le moyen de distribution (4) se fait par l'intermédiaire d'une conduite souple (18) formant des boucles suspendues au rail par des suspentes (19) qui coulissent dans ce rail.

17. Système de positionnement selon la revendication 1 **caractérisé en ce que** le réservoir de produits peut être directement fixé sur le mobile autonome.

18. Système de positionnement selon la revendication 3 **caractérisé en ce que** la rampe extensible (3) est dotée d'un bac de récupération (22).

19. Système de positionnement selon la revendication 1 **caractérisé en ce que** l'outil de traitement est désolidarisable du mobile autonome par l'intermédiaire de boulons (23).

20. Système de positionnement selon la revendication 1 **caractérisé en ce que** l'outil de traitement est monté sur un chariot (48) guidé par des galets (49) et relié au mobile autonome par un accouplement (50).

21. Système de positionnement selon la revendication 1 **caractérisé en ce que** le portique de positionnement (24) est constitué de trois guidages permettant un déplacement dans les trois dimensions, les actionneurs permettant ces déplacements pouvant être des vérins, hydrauliques ou pneumatiques, ou de motoréducteurs avec pignon et crémaillère.

22. Système de positionnement selon la revendication 1 **caractérisé en ce que** le mobile autonome (1) est soutenu par un rail de transport (26), fixé au portique (24), identique au rail de guidage (2), l'extrémité du dit rail (26) étant pourvu d'un cône de positionnement (30).

23. Système de positionnement selon la revendication 1 **caractérisé en ce que** la commande des actionneurs peut se faire manuellement depuis un pupitre de commande (11) ou automatiquement grâce à des capteurs de positionnement.

24. Système de positionnement selon la revendication 1 **caractérisé en ce que** le dispositif d'accouplement (25) est constitué:
- d'une barre (32) fixée perpendiculairement à l'extrémité du rail de guidage (2).
- d'un ou plusieurs crochets (33) situés à l'extrémité du rail de transport (26).

25. Ensemble mobile selon la revendication 2 **caractérisé en ce que** le dit ensemble mobile peut être attelé derrière un tracteur ou peut être également motorisé et guidé sur des rails au sol par exemple pour permettre un passage autonome d'une serre à une autre.

26. Ensemble constitué du dispositif autonome, du système de positionnement et de l'ensemble mobile, respectivement selon les revendications 1, 2 **caractérisé en ce que** l'ensemble des actionneurs peut être commandé manuellement depuis un pupitre de commande (11), ou être totalement automatisé et géré par un automate programmable ou une commande câblée, composée de plusieurs contacteurs électriques.

27. Système de positionnement selon la revendication 3 **caractérisé en ce que** les moyens de distribution de produits (4) sont montés coulissants sur des tringles (40), permettant de déplacer les dits moyens de distribution latéralement.

28. Système de positionnement selon la revendication 4 **caractérisé en ce que** le module d'aspersion à haute pression est constitué de buses de projection pouvant effectuer un mouvement de balayage de haut en bas et de gauche à droite.

## Patentansprüche

1. Positioniersystem für eine autonome Vorrichtung zur Verteilung von Pflanzenbehandlungsmitteln in geschlossenen Räumen, wobei sich diese autonome Vorrichtung aus folgenden Elementen zusammensetzt:
- einer mobilen, autonomen Anlage (1), die auf einer horizontalen Führungsschiene (2) angebracht und auf dieser Schiene innerhalb des Raums bewegt werden kann, wobei die genannte mobile Anlage von außen nach dem Schließen des Raums bedient und nach der Behandlung von der Führungsschiene genommen und in einem anderen Raum installiert werden kann
- einem Behandlungsgerät (3), das mit der mobilen, autonomen Anlage verbunden ist und die Verteilung des Produkts gewährleistet
das genannte Positioniersystem kennzeichnet sich dadurch, dass es folgende Elemente umfasst:
- einen dreidimensionalen Positionierrahmen (24)
- eine Kupplung (25) für das Anbringen der mobilen, autonomen Anlage (1) auf der horizontalen Führungsschiene (2).

2. Mobile Konstruktion gekennzeichnet dadurch, dass sie den Träger bildet für das Positioniersystem entsprechend Patentanspruch 1, für ein Steuerpult (11), einen oder mehrere Behälter mit den Pflanzenbehandlungsmitteln (39), sowie für Mittel zur Stromerzeugung (37), die ein Eigenstromerzeuger oder ein an die Zapfwelle einer Zugmaschine angeschlossener Wechselstromerzeuger, ein oder mehrere Kompressoren (38) mit Druckluftantrieb oder druckwasserbetrieben sein können.

3. Positioniersystem Positioniersystem entsprechend Patentanspruch 1 gekennzeichnet dadurch, dass das Behandlungsgerät aus einer seitlich ausziehbaren Rampe (3) besteht, die über Vorrichtungen für die Verteilung der Pflanzenbehandlungsmittel (4) verfügt, die mit dem Lagerbehälter (39) dieser Mittel verbunden sind.

4. Positioniersystem entsprechend Patentanspruch 1 gekennzeichnet dadurch, dass es sich bei dem Behandlungsgerät um ein Modul zur Hochdruckbesprengung handelt.

5. Positioniersystem entsprechend Patentanspruch 1, 3 oder 4 gekennzeichnet dadurch, dass die mobile, autonome Anlage (1) durch einen Motorkomplex (5) angetrieben wird, der durch vier Rollen (6) innerhalb der Führungsschiene (2) geführt wird, wobei die Verschiebung der genannten Anlage durch Rollen (7) gewährleistet wird, die einen Triebriemen tragen, der auf dem inneren, oberen Teil der Führungsschiene aufliegt, wobei der genannte Triebriemen durch einen Getriebemotor in Drehung versetzt wird.

6. Positioniersystem entsprechend Patentanspruch 1, 3 oder 4 gekennzeichnet dadurch, dass die mobile, autonome Anlage (1) durch einen Motorkomplex (5) angetrieben wird, der durch vier Rollen (6) innerhalb der Führungsschiene (2) geführt wird, wobei die Verschiebung der genannten Anlage durch Gitterräder gewährleistet wird, die auf dem unteren, äußeren Teil der Führungsschiene aufliegen, wobei die genannten Räder durch mit einem Getriebemotor (8) verbundene Triebriemen (41) in Rotation versetzt werden.

7. Positioniersystem entsprechend Patentanspruch 4 gekennzeichnet dadurch, dass die mobile, autonome Anlage durch eine Hochdruckturbine angetrieben wird.

8. Positioniersystem entsprechend Patentanspruch 5 gekennzeichnet dadurch, dass die durch die Rollen (7) auf der Führungsschiene ausgeübte Adhäsionskraft durch Druckzylinder (10) gewährleistet wird, wobei die Einstellung des Luftdrucks in den Zylindern es ermöglich, den Druck zwischen den Rollen (7) und der Führungsschiene (2) zu variieren, um so eine optimale Adhäsion zu erhalten, d.h. die Zylinder spielen unter anderem die Rolle von Dämpfern, mit denen Fehler in der Führung ausgeglichen werden können, während sie zugleich die für den Antrieb notwendige Adhäsionskraft liefern.

9. Positioniersystem entsprechend Patentanspruch 6 gekennzeichnet dadurch, dass die durch die Räder (40) auf der Führungsschiene ausgeübte Adhäsionskraft durch gelenkige Druckzylinder (43) auf gelenkigen Schwingarmen (42), die die Räder (40) tragen, gewährleistet wird.

10. Positioniersystem entsprechend Patentanspruch 3 gekennzeichnet dadurch, dass die ausziehbare Rampe aus einer oder mehreren Serien von Kreuzstücken (12) besteht, die verformbare Parallelogramme bilden, wobei jedes der Kreuzstücke über drei Rotationsachsen (13) verfügt, eine in der Mitte und eine an jedem Ende, jeder der Drehpunkte mit den entsprechenden Drehpunkten des benachbarten Kreuzstücks verbunden ist und der Zusammenbau von mehreren Kreuzstücken nach diesem Prinzip eine seitlich ausziehbare Struktur bildet.

11. Positioniersystem entsprechend Patentanspruch 10 gekennzeichnet dadurch, dass die Rampe aus zwei parallelen Serien von Kreuzstücken (16) besteht, die durch Abstandhalter (17) in Position gehalten werden, wobei mit dieser Form der Konstruktion eine stabilere Struktur erhalten wird.

12. Positioniersystem entsprechend Patentanspruch 10 oder 11 gekennzeichnet dadurch, dass die Ausbreitung der Rampe mit Hilfe von zwei Druckzylindern (14) erfolgt, die mit den Achsen (15) in der Mitte der Kreuzstücke verbunden sind, die das Parallelogramm im Zentrum der Rampe bilden, wobei die Rampe sich durch das Verschieben dieser beiden Gelenkpunkte in einer horizontalen Richtung in entgegengesetztem Sinne ausfaltet und umgekehrt, die Rampe sich durch das Annähern der beiden Punkte zusammenzieht.

13. Positioniersystem entsprechend Patentanspruch 10 oder 11 gekennzeichnet dadurch, dass die Ausbreitung der Rampe mit Hilfe von drei Druckzylindern (44), (44') und (45) erfolgt, die gelenkig auf einem Träger (46) montiert sind und entweder in bezug auf den unteren Drehpunkt (47) des Zentrums der Rampe oder in bezug auf die mittleren Drehpunkte (48) und (48') der Mitte der Rampe gelenkig sind.

14. Positioniersystem entsprechend Patentanspruch 3 gekennzeichnet dadurch, dass die zusammengefaltete Rampe durch einen klassischen Eingang eines Gewächshauses mit 1,5 m Breite passt.

15. Positioniersystem entsprechend Patentanspruch 3 gekennzeichnet dadurch, dass die Verteilervorrichtungen für die Behandlungsmittel (4) Strahldüsen für Flüssigkeiten, Verteiler mit Drehplatten für die Ausstreuung von Pulver oder Behandlungsrohre für hohe Kulturen sein können.

16. Positioniersystem entsprechend Patentanspruch 1 gekennzeichnet dadurch, dass die Heranführung der Behandlungsmittel vom Speichertank (39), der nicht von der mobilen, autonomen Anlage getragen wird, zu den Verteilervorrichtungen (4) über eine flexible Leitung (18) erfolgt, wobei diese Schlangen bildet, die mit in der Schiene gleitenden Aufhängern (19) in der Führungsschiene befestigt sind.

17. Positioniersystem entsprechend Patentanspruch 1 gekennzeichnet dadurch, dass der Speichertank für die Behandlungsmittel direkt auf der mobilen, autonomen Anlage befestigt werden kann.

18. Positioniersystem entsprechend Patentanspruch 3 gekennzeichnet dadurch, dass die ausziehbare Rampe (3) mit einem Auffangbehälter (22) ausgestattet ist.

19. Positioniersystem entsprechend Patentanspruch 1 gekennzeichnet dadurch, dass das Behandlungsgerät von der mobilen, autonomen Anlage mit Hilfe von Schrauben (23) getrennt werden kann.

20. Positioniersystem entsprechend Patentanspruch 1 gekennzeichnet dadurch, dass das Behandlungsgerät auf einem durch Rollen (49) geführten Gestell (48) montiert und mit der mobilen, autonomen Anlage durch eine Kupplung (50) verbunden ist.

21. Positioniersystem entsprechend Patentanspruch 1 gekennzeichnet dadurch, dass der Positionierrahmen (24) aus drei Führungen besteht und so Verschiebungen in den drei Richtungen möglich sind, wobei die Betätigungsgeräte für diese Verschiebungen Druckzylinder oder Getriebemotoren mit Ritzel und Zahnstange sein können.

22. Positioniersystem entsprechend Patentanspruch 1 gekennzeichnet dadurch, dass die mobile, autonome Anlage (1) von einer Transportschiene (26) getragen wird, die auf dem Positionierrahmen (24) befestigt und mit der Führungsschiene (2) identisch ist, wobei das Ende dieser Schiene mit einem Positionierkonus (30) versehen ist.

23. Positioniersystem entsprechend Patentanspruch 1 gekennzeichnet dadurch, dass die Steuerung der Betätigungsgeräte manuell von einem Steuerpult (11) aus oder automatisch mit Positionsfühlern erfolgen kann.

24. Positioniersystem entsprechend Patentanspruch 1 gekennzeichnet dadurch, dass die Kupplungsvorrichtung (25) aus folgenden Elementen besteht:
- einer Stange (23), die am Ende der Führungsschiene (2) senkrecht befestigt ist
- einem oder mehreren Haken (33) am Ende der Transportschiene (26).

25. Mobile Konstruktion entsprechend Patentanspruch 2 gekennzeichnet dadurch, dass die genannte mobile Konstruktion an einen Traktor gekoppelt oder auch mit einem Motor versehen und über Schienen geführt werden kann, um zum Beispiel einen autonomen Wechsel von einem Treibhaus ins nächste zu ermöglichen.

26. Konstruktion bestehend aus der autonomen Vorrichtung , dem Positioniersystem und der mobilen Konstruktion, entsprechend Patentanspruch 1 bzw. 2, gekennzeichnet dadurch, dass die gesamten Betätigungsgeräte manuell von einem Steuerpult (11) aus bedient oder vollständig automatisiert und von einem programmierten Automaten oder einer verkabelten Steuerung, bestehend aus mehreren elektrischen Schützen, gesteuert werden kann.

27. Positioniersystem entsprechend Patentanspruch 3 gekennzeichnet dadurch, dass die Verteiler für die Behandlungsmittel (4) auf einem Gestänge (40) gleitend montiert sind, wodurch die genannten Verteiler seitlich bewegt werden können.

28. Positioniersystem entsprechend Patentanspruch 4 gekennzeichnet dadurch, dass das Modul für Hochdruckbesprengung aus Düsen besteht, die eine Abtastbewegung von oben nach unten und von links nach rechts durchführen können.

## Claims

1. Positioning system for an autonomous distribution device for treatment products in a closed chamber, the said autonomous device including:
- an autonomous mobile fitting (1) that can be installed on a horizontal guide rail (2) and moving on the said horizontal rail within the chamber, the said mobile fitting being capable of being controlled from outside after closing of the chamber and capable of being removed from the guide rail after treatment to be installed in another chamber.
- a treatment tool (3) linked to the autonomous mobile fitting and ensuring distribution of the product
the said positioning system being **characterised in that** it includes:
- a three-dimensional positioning gantry (24)
- a device for coupling (25) of the autonomous mobile fitting (1) on the horizontal guide rail (2).

2. The mobile assembly **characterised in that** it supports the positioning system according to claim 1, a control console (11), electrical power generation facilities (37) to be either a generator unit or an AC generator connected to the tractor power take-off, one or more pneumatic and/or hydraulic compressors (38) and one or more tanks of products (39).

3. Positioning system according to claim 1 **characterised by** the fact that the treatment tool is a side extendable pantograph (3) provided with product distribution facilities (4) connected to a storage tank (39) of the said products.

4. Positioning system according to claim 1 **characterised by** the fact that the treatment tool is a high pressure sprinkler module.

5. Positioning system according to claim 1, claim 3 or claim 4 **characterised by** the fact that the autonomous mobile fitting (1) is driven by a motor assembly (5) guided by four rollers (6) inside the rail (2), with the movement of the said mobile fitting being ensured by rollers (7) bearing a belt (9) resting on the upper internal part of the rail, which belt (9) is driven in rotation by a motor reducer (8).

6. Positioning system according to claim 1, claim 3 or claim 4 **characterised by** the fact that the autonomous mobile fitting (1) is driven by a motor assembly (5) guided by four rollers (6) inside the rail (2), with the movement of the said mobile fitting being ensured by cage wheels (40) resting on the lower external part of the rail, which wheels are driven in rotation by belts (41) linked to a motor reducer (8).

7. Positioning system according to claim 4 **characterised by** the fact that the autonomous mobile fitting is driven by a high pressure turbine.

8. Positioning system according to claim 5 **characterised by** the fact that the adherence pressure applied by the rollers (7) on the rail is ensured by cylinders (10), the air pressure setting in these cylinders means the pressure between the rollers (7) and the rail (2) can be varied to obtain optimum adherence and the cylinders play a shock absorption role so that certain guidance defects can be compensated for while ensuring the adherence necessary for drive.

9. Positioning system according to claim 6 **characterised by** the fact that the adherence pressure applied by the wheels (40) on the rail is ensured by cylinders (43) hinged on articulated rods (42) bearing the wheels.

10. Positioning system according to claim 3 **characterised by** the fact that the extendable pantograph comprises one or more series of cross-pieces (12) forming deformable parallelograms, with each cross-piece having three axes of rotation (13), one in the middle and one at each end, with each of the points of rotation being linked to the corresponding points of rotation of the neighbouring cross-pieces and the assembly of several cross-pieces according to this principle forming a laterally deformable structure.

11. Positioning system according to claim 10 **characterised by** the fact that the pantograph comprises two parallel series of cross-pieces (16) separated by spacers (17) allowing for a more rigid structure to be obtained.

12. Positioning system according to claim 10 or claim 11 **characterised by** the fact that the deployment of the pantograph is performed using two cylinders (14) linked to axes (15) in the middle of the cross-pieces forming the centre parallelogram of the pantograph, and that by displacement of these two hinge points along the horizontal direction in opposite directions, the pantograph is deployed and, conversely, when the two points converge, the pantograph folds.

13. Positioning system according to claim 10 or claim 11 **characterised by** the fact that the deployment of the pantograph is performed by three cylinders (44), (44') and (45) hinged on a support (46) and articulated respectively at the point of the lower swivel (47) of the centre of the pantograph and at the intermediate swivel points (48) and (48') of the middle of the pantograph.

14. Positioning system according to claim 3 **characterised by** the fact that the folded pantograph is capable of going through a conventional greenhouse entrance measuring 1.5 m wide.

15. Positioning system according to claim 3 **characterised by** the fact that the product distribution facilities (4) can be liquid spray nozzles, rotating disc distributors for the projection of powder or treatment guns for higher crops.

16. Positioning system according to claim 1 **characterised by** the fact that the routing of the products from a storage tank (39), not borne by the autonomous mobile fitting, towards the distribution facility (4) is through a hose (18) forming loops hanging from the rail by suspension straps (19) that slide on the rail.

17. Positioning system according to claim 1 **characterised by** the fact that the product tank can be secured directly to the autonomous mobile fitting.

18. Positioning system according to claim 3 **characterised by** the fact that the extendable pantograph (3) is provided with a recovery tank (22).

19. Positioning system according to claim 1 **characterised by** the fact that the treatment tool can be dismounted from the autonomous mobile fitting by removing bolts (23).

20. Positioning system according to claim 1 **characterised by** the fact that the treatment tool is mounted on a trolley (48) guided by rollers (49) and connected to the autonomous mobile fitting by a coupling (50).

21. Positioning system according to claim 1 **characterised by** the fact that the positioning gantry (24) comprises three guides to allow for three-dimensional movement, with actuators allowing for movement being either hydraulic or pneumatic cylinders, or motor reducers with arc and pinion.

22. Positioning system according to claim 1 **characterised by** the fact that the autonomous mobile fitting (1) is supported by a transport rail (26), secured to the gantry (24), identical to the guide rail (2), with the end of the said rail being equipped with a positioning cone (30).

23. Positioning system according to claim 1 **characterised by** the fact that control of the actuators can be ensured manually from a control console (11) or automatically thanks to positioning sensors.

24. Positioning system according to claim 1 **characterised by** the fact that the coupling device (25) comprises:
- a bar (32) secured perpendicular to the end of the guide rail (2),
- one or more hooks (33) located on the end of the transport rail (26).

25. Mobile assembly according to claim 2 **characterised by** the fact that the said mobile assembly can be hitched behind a tractor or can also be motorised and guided on the rails on the ground to allow, for example, for autonomous drive from one greenhouse to another.

26. Assembly comprising the autonomous assembly, the positioning system and the mobile assembly respectively according to claims 1 and 2 **characterised by** the fact that the assembly of actuators can be controlled manually from a control console (11) or be fully automated and managed by a programmable automaton or a wired control comprising several electrical contactors.

27. Positioning system according to claim 3 **characterised by** the fact that the product distribution facilities (4) are assembled to slide on hanging bars (40) so the said distribution facilities can be moved sideways.

28. Positioning system according to claim 4 **characterised by** the fact that the high pressure sprinkler module comprises spray nozzles that can make a sweeping movement from top to bottom and left to right.
